# EUROPEAN PATENT SPECIFICATION

(11) **EP 1 669 323 B1**
(45) Date of publication and mention of the grant of the patent: **05.07.2017**
(21) Application number: 04106657.2
(22) Date of filing: 08.12.2004
(51) Int. Cl.: C01B 3/32, B01J 19/24

(54) **Reactor and method for the production of hydrogen**
Reaktor und Methode zur Herstellung von Wasserstoff
Réacteur et méthode pour la production d'hydrogène

(43) Date of publication of application: 14.06.2006
(73) Proprietor: Karlsruher Institut für Technologie, 76131 Karlsruhe (DE)
(72) Inventor: Görke, Oliver, 76344 Eggenstein-Leopoldshafen (DE); Pfeifer, Peter, 76351 Linkenheim-Hochstetten (DE); Schubert, Klaus, 76227 Karlsruhe (DE)
(74) Representative: Fitzner, Uwe

(56) References cited:
- EP-A- 0 924 162
- EP-A- 1 061 039
- WO-A-99/61369
- WO-A-02/070402
- WO-A-02/086987
- WO-A-03/035546
- US-A- 5 229 102
- US-A1- 2004 136 883
- US-A1- 2004 191 137

## Description

The present invention is directed to a novel reactor concept and a method for the production of hydrogen.

WO02/02460 relates to a membrane reactor for the production of highly pure hydrogen from a hydrocarbon stream comprising a diffusion membrane, permeable to hydrogen and optionally a catalyst for the conversion of hydrocarbons to hydrogen and separation of hydrogen gas from the remaining gases.

On one side of the membrane a combustion of hydrogen is carried out. The resulting heat is transported through the membrane and used for the conversion process. The hydrogen resulting from the conversion process permeates through the membrane. On the other side of the membrane the hydrogen reacts by supplying air.

DE 103313685 A1 describes a reactor which consists of several separate channels which are parallely placed. This reactor is only used for the exchange of heat energy. The separation of hydrogen is not possible.

DE 10213709 describes a reactor wherein oxygen permeates through a membrane consisting of ceramic material. This process is not directed to the production and separation of hydrogen.

EP 1418155 A1 describes a reactor consisting of two chambers which are separated by a hydrogen permeable Pd-membrane. In the first chamber a conversion is carried out. The produced hydrogen permeates through the membrane into the second chamber. In this process an integrated heating procedure is not used.

WO 02/14215 describes a reactor consisting of two passages. The reaction space is surrounded by a membrane which is hydrogen-permeable and consists of Pd/Ag. The membrane is coated on a conductive material for example SiC. In this a reactor, a combined crack and hydrogenation process is carried out. The resulting hydrogen is separated by the membrane. The necessary heat is produced by oxidation of the residual gas containing CO and H₂.

WO 02/06144 describes an apparatus containing a membrane for the separation of hydrogen. The membrane consists of Pd/Ag. The process for the separation of the hydrogen is carried out at 400°C - 600°C.

WO 02/062700 describes a method wherein in the first step an oxidation of a mixture of hydrocarbons is carried out. In a second step water vapor reacts with CO resulting from the procedure of the third step. In this process it is not necessary to use additional heat. The second reaction step is initiated by a plasma. The result is a permanent reaction. Accordingly, this process is not directed to an integrated heating process. Furthermore the apparatus is not sufficient for the conversion of ethanol.

Devices for the production of hydrogen and the subsequent separation of hydrogen through a membrane are disclosed in WO 02/086987 A2, US 2004/0191137 and EP 0 924 162 A2. This hydrogen separation membrane might be damaged due to the high temperatures and pressures in these devices.

It is the object of the present invention to provide a reactor without the disadvantages of the mentioned state of the art.
Particularly, the reactor should be useable for the transformation of ethanol, more especially for ethanol produced by/from biological materials. Moreover the reactor should be useable for other materials, for example propane, butane, (bio-) methanol, (bio-)methane, gasoline or naphta, too.

Accordingly, the present invention is directed to a reactor for the production of hydrogen according to the claims, in detail comprising,
a first area (1) for the production of heat or discharge of a heat transfer medium,
a second area (2) wherein the production of the hydrogen (11) is carried out,
a third area (3) in order to carry of the produced hydrogen (11)
a metallic composite membrane (5) containing metal or consisting of metal wherein the metallic composite membrane (5) is located between the second area (2) and the third area (3), and wherein
the metallic composite membrane (5) having
a porous foil having a thickness of 50 µm to 2 mm and
a membrane active layer having a thickness of 0.5 to 25 µm laminated to the porous foil which allows solely the permeation of hydrogen and
a border consisting of a material which is not permeable for gas
wherein the hydrogen permeates through the membrane active layer and then diffuses through the porous foil
and wherein
the three areas together form a unit which can be combined with other units of the same kind such that these units can be sandwiched with each other.

The term "area" in this context describes a separate structure having a separate purpose, which will be described later on.

The present invention is accordingly directed to an apparatus consisting of three areas. These three areas together form a unit which can be combined with other units of the same kind. These units consisting of the three areas can be sandwiched with each other.

The first area is used for the production of heat, energy or the discharge of a heat transfer medium. The production of heat in the channels of the first area is carried out by oxidation process. Examples for such oxidation processes are the combustion of hydrogen, carbon monoxide, methane, propane/butane, methanol or ethanol or alternatively partial oxidation of the same components.

A preferred oxidation process is the combustion.

The first area may contain catalysts in order to carry out the oxidation. For instance Pt and Pd on Al₂O₃, ZrO₂, SiO₂, TiO₂, Ce₂O₃ or Perovskite are placed as catalysts in the first area.

The advantage of an area with such a structure is that in a close space the necessary heat energy is available.

The second area is used for the conversion process and it contains a catalyst. Preferably Rh or Pd on non acidic supports, preferably Ce₂O₃, supported by Pt, Ni or Cu are placed as catalysts in the second area.
According to the invention preferably ethanol is used as fuel for hydrogen production.
Nevertheless, it is possible to use other fuels for example propane, butane, (bio-)methanol, (bio-)methane, gasoline or naphta.

Most preferred is the use of ethanol produced by/from biological materials. According to the state of the art it was a problem that during the conversion of ethanol produced by/from biological materials to hydrogen coke formation can issue. According to the present invention it is possible to carry out the oxidation process and the regulation of the temperature including the production of the heat energy on a close space. Moreover the necessary amount of catalyst is minimized when using the reactor according to the invention.

The different areas posses a structure for each flow and/or to can the catalyst by means of wall-coating or catalyst powder. The geometry of the structure consist of straight or curved channels of rectangular or complex shape or of an array of columns of any shape which is necessary to ensure the stability of the stack. That means, the catalyst may be placed for examples in both channels of the first two areas. A catalyst can be coated on the walls of the channels. Alternatively the channels can contain a catalyst charge in suitable form, e.g. powders with small grain size i.e. diameters 20 - 200 µm.

Moreover, the oxidation as well as the reaction area can consists of a two foil stack each where separate reactants can be dosed into the reaction area by complete (one hole between the two foils) or partial mixing (more than one hole between the two foils) like described in more detail in patent WO0220149/DE10044526.

The third area is in principle structured like the other two areas. That means that it can also contain channels. The resulting hydrogen is carried off through the corresponding structures of the third area, for example through the channels.

According to the invention a metallic composite membrane is placed between the second and third area. The membrane active layer is dense and pinhole free so that the membrane active layer allows solely the permeation of hydrogen. Preferably the membrane contains as material metal or consists of metal.
As materials for the membrane Pd and Ag and mixtures of these metals can be used.
The thickness of the membrane active layer is 0.5 to 25 µm, preferably 1 to 10 µm.

The membrane active layer is preferably coated or welded on a porous foil containing metal or consisting thereof. As metals stainless steel or nickel alloys can be used. The thickness of the porous foil is 50 µm to 2 mm preferably 100 - 500 µm. According to the invention the foil consists of a porous material. That means, the material must allow the diffusion of hydrogen permeated through the membrane active layer by the process in the second area.

According to the invention it is preferred that the border of the membrane or the combination of membrane and foil consists of a material which is not permeable for gas.
The apparatus comprising the three areas and the membrane is accordingly gas-proofed.

The described apparatus according to the invention has the general advantage that the hydrogen can be produced in the same apparatus which is also used for the production of the necessary heat energy. That means, the heat energy can be produced and purified by an internal process.
Moreover, the described apparatus according to the invention is a membrane reactor. That means hydrogen is selectively removed from the second area (production area) by means of the membrane separating the second and third areas, before it can react backwards with other by-products, thus reducing the thermodynamic limitations that would occur in a conventional reactor.
Furthermore, the necessary amount of catalyst is minimized by an decrease in mass transport distance between hydrogen production site (second area) and therefore increased hydrogen permeation through the membrane and increased reaction kinetics and equilibrium shift on the hydrogen production site. Finally the apparatus is preferably useable for the conversion of ethanol produced by/from biological materials. Namely the specific construction of the apparatus according to the invention has the advantage that coke formation can be avoided by enhanced temperature control.

The invention will now be explained in detail having regard to the simplified figure.

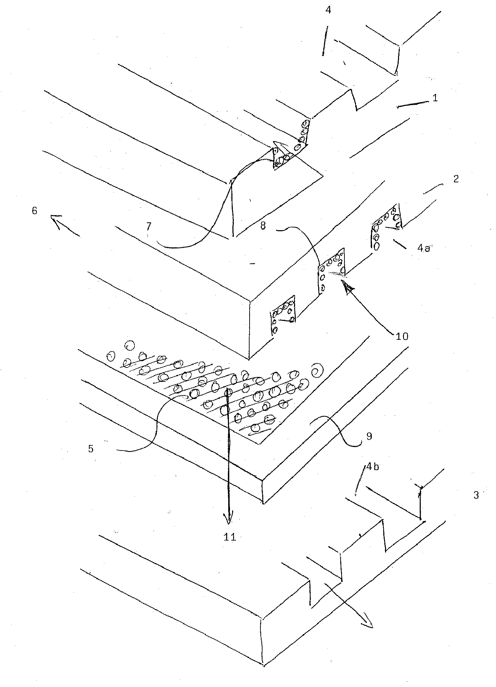

The figure shows the three areas 1, 2 and 3. The areas 1, 2 and 3 contain the channels 4, 4a and 4b.
Channel 4 may contain catalyst (7) in order to carry out a combustion process. If channel 4 is constructed without catalyst it can be used for the transport of a heat-energy-medium. That means it is possible to produce in the passage 1 heat energy by an oxidation process or to use an external heat medium which is transported to channel 4.

In area 2 the conversion process is carried out. That means, the fuel for hydrogen production 10, for example ethanol, is added to the channel 4a.

In the example according to the figure the catalyst 8 is coated on at the wall of the channel 4a. After carrying out the conversion process the resulting CO₂/CO is carried off.

The resulting hydrogen 11 permeates through the membrane 5.

In the example according to the figure the membrane consists of a Pd/Ag coating on a metallic porous foil. The border 9 of the membrane and of the porous foil is not porous.

The hydrogen permeated through the membrane 5 is carried off through the channel 4b of the area 3.

## Claims

1. Reactor for production of hydrogen (11) comprising.
a first area (1) for the production of heat or discharge of a heat transfer medium,
a second area (2) wherein the production of the hydrogen (11) is carried out,
a third area (3) in order to carry of the produced hydrogen (11) a metallic composite membrane (5) containing metal or consisting of metal
wherein the metallic composite membrane (5) is located between the second area (2) and the third area (3), and wherein
the metallic composite membrane (5) having
a porous foil having a thickness of 50 µm to 2 mm and
a membrane active layer having a thickness of 0.5 to 25 µm laminated to the porous foil which allows solely the permeation of hydrogen and
a border consisting of a material which is not permeable for gas
wherein the hydrogen permeates through the membrane active layer and then diffuses through the porous foil
and wherein
the three areas together form a unit which can be combined with other units of the same kind such that these units can be sandwiched with each other.

2. Reactor according to one of the preceding claims **characterized in that** catalyst (7) for carrying out a combustion process takes place in the first area (1).

3. Reactor according to one of the preceding claims **characterized in that** catalysts (8) for carrying out the conversion of ethanol and water (10) to hydrogen (11) are placed in the second area (2).

4. Reactor according to one of the preceding claims **characterized in that** channels (4, 4a, 4b) are located in the areas (1, 2, 3).

5. Reactor according to one of the preceding claims **characterized in that** the catalyst (7) for carrying out a combustion process is placed in the channels (4a) of the first area (1).

6. Reactor according to one of the preceding claims **characterized in that** the catalysts (8) for carrying out the conversion of ethanol and water (10) to hydrogen (11) are placed in the channels (4b) of the second area (2).

7. Reactor according to one of the preceding claims **characterized in that** the metallic composite membrane is selective with regard to the permeation of hydrogen (11).

8. Reactor according to one of the preceding claims **characterized in that** the porous material is a metal foil.

9. Reactor according to one of the preceding claims **characterized in that** the porous foil has a thickness of 100 to 500 µm.

10. Reactor according to one of the preceding claims **characterized in that** the membrane active layer has a thickness of 1 to 10 µm.

11. Reactor according to one of the preceding claims **characterized in that** the membrane active layer contains Pd or Ag, Cu, or mixtures thereof or consists of the named metals.

12. Reactor according to one of the preceding claims **characterized in that** the border (9) of the metallic composite membrane (5) is gas proof.

13. Reactor according to claim 12 **characterized in that** the border (9) contains a non porous material or consists thereof.

14. Method for production of hydrogen (11) in a reactor according to one of the preceding claims **characterized in that**
a mixture of ethanol and water is supplied to the second area in order to carry out a conversion to hydrogen and CO₂/CO
the produced CO₂/CO (6) is carried off
the produced hydrogen is separated by the membrane (5) and
the separated hydrogen (11) is carried off through the third area (3).

15. Method according to claim 14 **characterized in that** a heat transfer medium is flowing through the first area (1).

16. Method to one of the claims 14 or 15 **characterized in that** an oxidation is carried out in order to produce heat energy, wherein
the oxidation preferably is a combustion process, especially a combustion process carried out by using catalysts (7).

17. Use of the reactor according to claims 1 to 13 for the conversion of ethanol produced from/by biological materials or methods.

## Patentansprüche

1. Reaktor zur Erzeugung von Wasserstoff (11) umfassend einen ersten Bereich (1) für die Erzeugung von Wärme oder zur Abführung eines Mediums zur Wärmeleitung, einen zweiten Bereich (2), in dem die Erzeugung von Wasserstoff (11) durchgeführt wird, einen dritten Bereich (3) zur Ableitung des erzeugten Wasserstoffs (11) eine Membran aus metallischem Werkstoff (5), enthaltend ein Metall oder hergestellt aus Metall, wobei die Membran aus metallischem Werkstoff (5) sich zwischen dem Bereich (2) und dem Bereich (3) befindet und wobei die Membran aus metallischem Werkstoff (5) zusammengesetzt ist aus einer porösen Folie, welche eine Dicke von 50 µm bis 2 mm hat und einer aktiven Membranschicht von einer Dicke von 0.5 bis 25 µm, laminiert auf die poröse Folie, welche ausschließlich die Durchlassung von Wasserstoff erlaubt, und einen Rand, bestehend aus einem Material, welches undurchlässig für Gas ist, wobei der Wasserstoff durch die aktive Membranschicht hindurch dringt und dann durch die poröse Folie diffundiert und wobei die drei Bereiche eine Einheit formieren, welche mit anderen Einheiten kombiniert werden kann, derart, dass diese Einheiten untereinander geschichtet ("gesandwiched") werden können.

2. Reaktor gemäß einem der vorhergehenden Ansprüche, **dadurch gekennzeichnet, dass** der Katalysator (7) zur Durchführung des Verbrennungsprozesses im ersten Bereich (1) stattfindet.

3. Reaktor gemäß einem der vorhergehenden Ansprüche, **dadurch gekennzeichnet, dass** die Katalysatoren (8) zur Durchführung der Umwandlung von Ethanol und Wasser (10) zu Wasserstoff (11) im zweiten Bereich angeordnet sind (2).

4. Reaktor gemäß einem der vorhergehenden Ansprüche, **dadurch gekennzeichnet, dass** die Kanäle (4, 4a, 4b) in den Bereichen (1,2,3) angeordnet sind.

5. Reaktor gemäß einem der vorhergehenden Ansprüche, **dadurch gekennzeichnet, dass** der Katalysator (7) für die Durchführung eines Verbrennungsprozesses in den Kanälen (4a) des ersten Bereichs (1) angeordnet ist.

6. Reaktor gemäß einem der vorhergehenden Ansprüche, **dadurch gekennzeichnet, dass** die Katalysatoren (8) zur Durchführung der Umwandlung von Ethanol und Wasser (10) zu Wasserstoff (11) in den Kanälen (4b) des zweiten Bereichs (2) angeordnet sind.

7. Reaktor gemäß einem der vorhergehenden Ansprüche, **dadurch gekennzeichnet, dass** die aktive Membranschicht in Bezug auf die Durchlässigkeit für Wasserstoffs (11) selektiv ist.

8. Reaktor gemäß einem der vorhergehenden Ansprüche, **dadurch gekennzeichnet, dass** das poröse Metall eine Metallfolie ist.

9. Reaktor gemäß einem der vorhergehenden Ansprüche, **dadurch gekennzeichnet, dass** die poröse Folie eine Dicke von 100 bis 500 µm hat.

10. Reaktor gemäß einem der vorhergehenden Ansprüche, **dadurch gekennzeichnet, dass** die aktive Membranschicht eine Dicke von 1 bis 10 µm hat.

11. Reaktor gemäß einem der vorhergehenden Ansprüche, **dadurch gekennzeichnet, dass** die aktive Membranschicht Pd oder Ag, Cu oder eine Mischung daraus enthält oder aus den genannten Metallen besteht.

12. Reaktor gemäß einem der vorhergehenden Ansprüche, **dadurch gekennzeichnet, dass** der Rand (9) des metallischen Membranwerkstoffs (5) für Gas undurchlässig ist.

13. Reaktor gemäß Anspruch 12, **dadurch gekennzeichnet, dass** der Rand (9) ein nicht poröses Metall enthält oder daraus besteht.

14. Verfahren zur Produktion von Wasserstoff (11) in einem Reaktor gemäß einem der vorhergehenden Ansprüche, **dadurch gekennzeichnet, dass** eine Mischung von Ethanol und Wasser dem zweiten Bereich hinzu gegeben wird, um die Umwandlung von Wasserstoff und CO2/CO durchzuführen, das CO₂/CO (6) abgeleitet wird, der produzierte Wasserstoff durch die Membran (5) getrennt wird, und der Wasserstoff (11) über den dritten Bereich (3) abgeführt wird.

15. Verfahren gemäß Anspruch 14, **dadurch gekennzeichnet, dass** ein Medium zur Wärmeübertragung durch den ersten Bereich (1) verläuft.

16. Verfahren gemäß einem der Ansprüche 14 oder 15, **dadurch gekennzeichnet, dass** eine Oxidation durchgeführt wird, um Wärmeenergie zu erzeugen, wobei die Oxidation vorzugsweise ein Verbrennungsprozeß ist, besonders vorzugsweise ein Verbrennungsprozeß, durchgeführt durch die Benutzung von Katalysatoren (7).

17. Verwendung des Reaktors gemäß den Ansprüchen 1 bis 13 zur Umwandlung von Ethanol, produziert ausgehend von/oder durch biologische(n) Materialien oder Prozesse(n).

## Revendications

1. Réacteur pour la production de l'hydrogène (11) comprenant une première zone (1) pour la production de chaleur ou de décharge d'un milieu conducteur de la chaleur,une seconde zone (2) dans laquelle la production de l'hydrogène (11) est réalisée,une troisième zone (3) afin d'évacuer l'hydrogène produite (11) une membrane de matériau metallique (5) contenant un métal ou composée de métal dans lequel la membrane de matériau métallique (5) est située entre la seconde zone (2) et la troisième zone (3), et où la membrane de matériau métallique (5) est composée d'une feuille poreuse avec une épaisseur de 50 µm à 2 mm et une couche de membrane active avec une épaisseur de 0.5 à 25 µm, laminée sur une feuille poreuse que permet seulement la perméation de l'hydrogène et une bordure composée d'un matériau pas perméable pour gaz où l'hydrogène traverse la couche de membrane active et ensuite diffuse par la feuille poreuse et où les trois zones ensemble forment une unité que peut être combinée avec des autres unités de manière que cettes unités peuvent être plaquées ("sandwiched") les uns avec les autres.

2. Réacteur selon l'une des revendications précédentes, **caractérisé en ce que** le catalyseur (7) pour la mise en oeuvre d'un processus de combustion a lieu dans la première zone (1).

3. Réacteur selon l'une des revendications précédentes, **caractérisé en ce que** les catalyseurs (8) pour effectuer la conversion d'éthanol et de l'eau (10) à l' hydrogène (11) sont situés dans la deuxième zone (2).

4. Réacteur selon l'une des revendications précédentes, **caractérisé en ce que** des canaux (4, 4a, 4b) sont situés dans les zones (1, 2, 3).

5. Réacteur selon l'une des revendications précédentes **caractérisé en ce que** le catalyseur (7) pour la mise en oeuvre d'un procédé de combustion est placé dans les canaux (4a) de la première zone (1).

6. Réacteur selon l'une des revendications précédentes, **caractérisé en ce que** les catalyseurs (8) pour la mise en oeuvre de la conversion de l'éthanol et de l'eau (10) à l'hydrogène (11) sont placés dans les canaux (4b) de la deuxième zone (2).

7. Réacteur selon l'une des revendications précédentes, **caractérisé en ce que** la membrane de matériau métallique est sélective par rapport à la perméation de l' hydrogène (11).

8. Réacteur selon l'une des revendications précédentes, **caractérisé en ce que** le métal poreuse est une feuille de métal.

9. Réacteur selon s'une des revendications précédentes, **caractérisé en ce que** la feuille poreuse a une épaisseur de 100 to 500 µm.

10. Réacteur selon l'une des revendications précédentes, **caractérisé en ce que** la couche de membrane active a une épaisseur de 1 to 10 µm.

11. Réacteur selon l'une des revendications précédentes, **caractérisé en ce que** la couche de membrane active contient de Pd or Ag, Cu, ou des mélanges de ceux-ci ou consiste en des métaux cités.

12. Réacteur selon d'une des revendications précédentes, **caractérisé en ce que** la bordure (9) de la membrane de matériau métallique (5) n'est pas perméable pour gaz.

13. Réacteur selon la revendication 12, **caractérisé en ce que** la bordure (9) contient un matériau non poreux ou consiste de celui-ci.

14. Procédé pour la production de l'hydrogène (11) dans un réacteur selon l'une des revendications précédentes, **caractérisé en ce qu'**une mélange de l'éthanol et de l'eau est fournie à la seconde zone afin d'éffectuer la conversion à l'hydrogène et CO2/CO, le CO2/CO (6) produit est enlevé l'hydrogène produit est séparé par la membrane (5) et l'hydrogène (11) est évacué à travers la troisième zone (3).

15. Procédé selon la revendication 14, **caractérisé en ce qu'**un milieu de transfer de chaleur coule par la première zone (1).

16. Procédé selon l'une des revendications 14 ou 15, **caractérisé en ce qu'**une oxydation est effectuée afin de produire de l'énergie thermique, oú l'oxydation est de préférence une procédure de combustion, particulièrement de préférence une procédure de combustion, réalisée par utilisant des catalyseurs (7).

17. Utilisation du réacteure selon des revendications 1 à 13 pour la conversion de l' éthanol produit à partir de/par des matériaux ou des procédés biologiques..
